# EUROPÄISCHE PATENTSCHRIFT

(11) **EP 3 907 713 B1**
(45) Veröffentlichungstag und Bekanntmachung des Hinweises auf die Patenterteilung: **17.07.2024**
(21) Anmeldenummer: 21164005.7
(22) Anmeldetag: 22.03.2021
(51) Int. Cl.: G08B 13/196, G08B 17/00, G08B 17/10, G08B 17/12

(54) **DETEKTIONSEINRICHTUNG, VERFAHREN, COMPUTERPROGRAMM UND SPEICHERMEDIUM**
DETECTION DEVICE, METHOD, COMPUTER PROGRAM AND STORAGE MEDIUM
DISPOSITIF DE DÉTECTION, PROCÉDÉ, PROGRAMME INFORMATIQUE ET SUPPORT D'ENREGISTREMENT

(30) Priorität: 06.05.2020 DE 102020205709
(43) Veröffentlichungstag der Anmeldung: 10.11.2021
(73) Patentinhaber: Robert Bosch GmbH, 70442 Stuttgart (DE)
(72) Erfinder: Stadler, Anton, 83209 Prien (DE); Wittmann, Soeren, 86444 Affing (DE)

(56) Entgegenhaltungen:
- EP-A2- 2 690 611
- WO-A1-2017/190882
- US-A1- 2011 103 641

## Beschreibung

### Stand der Technik

Die Erfindung betrifft eine Detektionseinrichtung zur Detektion eines Ereignisses in einem Überwachungsbereich, mit einer Übernahmeschnittstelle zur Übernahme mindestens eines Bildes, wobei das Bild eine Szene des Überwachungsbereichs zeigt. Die Detektionseinrichtung weist eine Bildanalyseeinheit zur Detektion eines Vorliegens des Ereignisses im Überwachungsbereich x auf.

Die bildbasierte Detektion von Ereignissen in Überwachungsbereichen findet sowohl im privaten als auch im gewerblichen Bereich breite Anwendung. Insbesondere die Detektion von Bränden und Rauchentwicklung basierend auf einer kameratechnischen, im Speziellen videotechnischen, Überwachung ist eine bevorzugte Anwendung.

Die Druckschrift DE 10 2016 207 712 A1 beschreibt eine Detektionsvorrichtung zur Detektion eines Ereignisses, insbesondere eines Brandes, in einem Überwachungsbereich basierend auf mindestens einem Bild des Überwachungsbereichs. Eine Bildanalyseeinheit ist ausgebildet auf Basis des Bildes zu mindestens einer Position im Überwachungsbereich Ereigniskenndaten zu bestimmen, wobei eine Alarmeinheit ausgebildet ist, basierend auf einem Vergleich der Ereigniskenndaten und Alarmkenndaten einen Alarm auszugeben. Die Detektionsvorrichtung weist eine Berechnungseinheit auf, basierend auf gespeicherten Ereigniskenndaten einen Fehler Ereignisbereich zu bestimmen, wobei für einen solchen Bereich Alarme festgestellt wurden, obwohl das Ereignis in Realität nicht vorlag.

In der Druckschrift EP 2690611 A2 wird offenbart, dass zur Verhinderung von Fehlalarmen bei einer Brandüberwachungseinrichtung ein fehlerhafter Bereich in ein Maskierungsmodul eingetragen wird und dieser Bereich nicht mehr ausgewertet wird.

In der Druckschrift WO 2017/190882 A1 wird offenbart, dass zur Verhinderung von Fehlalarmen bei einer Brandüberwachungseinrichtung ein fehlerhafter Bereich anhand von Grenzwerten so unempfindlich gemacht wird, so dass dieser Bereich keine fehlerhaften Ergebnisse mehr liefert.

Bildbasierte Ereignisdetektionseinrichtungen sind zwar in der Lage, Ereignisse sehr schnell zu detektieren, insbesondere gegenüber konventionellen Detektionseinrichtungen, andererseits weisen sie häufig eine höhere Falschalarmrate auf. Insbesondere zur Kopplung einer bildbasierten Detektionsvorrichtung mit einer Brandmeldezentrale, ist eine Reduzierung der Falschalarmrate gewünscht und/oder nötig. Zur Reduzierungen können Masken für Bildbereiche eingesetzt werden, die eine Alarmauslösung in besonders kritischen Bereichen komplett ausschließen. Für den Benutzer, Kunden und/oder Anwender ist es häufig nicht ersichtlich und/oder klar, welche Bereiche auszuschließen oder zu Filtern sind, sodass eine Konfiguration, Inbetriebnahme oder Aktualisierung oft gar nicht oder nur sehr arbeitsintensiv möglich ist.

### Offenbarung der Erfindung

Die Erfindung betrifft eine Detektionseinrichtung zur Detektion eines Ereignisses mit den Merkmalen des Anspruchs 1. Ferner betrifft die Erfindung ein Verfahren, ein Computerprogramm und ein Speichermedium. Weitere Vorteile, Wirkungen und Ausgestaltungen ergeben sich aus den Unteransprüchen, der Beschreibung und den beigefügten Figuren.

Die Erfindung betrifft eine Detektionseinrichtung zur Detektion eines Ereignisses. Die Detektionseinrichtung kann hardwaretechnisch oder softwaretechnisch ausgebildet sein. Insbesondere ist die Detektionseinrichtung zur Kopplung und/oder Anbindung an eine Meldezentrale, zum Beispiel Brandmeldezentrale ausgebildet. Die Detektionseinrichtung ist beispielsweise zur Detektion eines Brandes, eines Feuers, von Rauch, einer Explosion und/oder einer Überhitzung, beispielsweise Glühens, ausgebildet. Als Detektion wird insbesondere eine Untersuchung und/oder ein Feststellen verstanden, ob das Ereignis stattfindet und/oder vorliegt. Die Detektion des Ereignisses erfolgt insbesondere für und oder in einem Überwachungsbereich. Der Überwachungsbereich ist vorzugsweise ein Innenbereich, beispielsweise ein Büro, eine Küche, eine Lagerhalle oder ein Produktionsbereich. Im Speziellen ist die Detektionseinrichtung zur sicherheitstechnischen, beispielsweise brand- bzw.- feuertechnischen Überwachung, des Überwachungsbereichs ausgebildet. Beispielsweise kann die Detektionseinrichtung ausgebildet sein, ein detektiertes Ereignis als Alarm auszugeben und/oder zu melden.

Die Detektionseinrichtung weist eine Übernahmeschnittstelle auf. Die Übernahmeschnittstelle kann eine hardwaretechnische Schnittstelle bilden oder als eine virtuelle, im Spezielle softwaretechnische, Schnittstelle ausgebildet sein. Beispielsweise ist die Übernahmeschnittstelle mit einer Kamera gekoppelt und oder koppelbar. Die Übernahmeschnittstelle ist ausgebildet, mindestens ein Bild, im Speziellen von der Kamera, zu übernehmen. Insbesondere kann die Übernahmeschnittstelle zur Übernahme eine Bildsequenz, beispielsweise eines Videos, ausgebildet sein. Optional kann die Detektionseinrichtung mit einer Mehrzahl an Kameras gekoppelt sein und/oder koppelbar sein, insbesondere zur jeweiligen Übernahme von Bildern. Das Bild zeigt eine Szene des Überwachungsbereichs. Die Szene ist beispielsweise als eine Momentaufnahme des Überwachungsbereichs oder eines Abschnitts des Überwachungsbereichs ausgebildet. Die Szene umfasst und/oder zeigt beispielsweise Einrichtung, Objekte, insbesondere Gegenstände, Tiere und/oder Personen. Im Speziellen umfasst und/oder zeigt die Szene einen Hintergrund.

Die Detektionseinrichtung weist eine Bildanalyseeinheit auf. Die Bildanalyseeinheit kann insbesondere softwaretechnisch oder hardwaretechnisch ausgebildet sein. Der Bildanalyseeinheit ist insbesondere das Bild, im Speziellen die Bildsequenz, bereitgestellt. Die Bildanalyseeinheit umfasst Konfigurationsdaten. Die Konfigurationsdaten sind beispielsweise voreingestellt, veränderbar und/oder regelbar. Insbesondere können die Konfigurationsdaten von dem Benutzer regelbar und/oder einstellbar sein. Beispielsweise umfassen die Konfigurationsdaten eine Sensitivität. Ferner können die Konfigurationsdaten Informationen, Klassifikationen und/oder Eigenschaften umfassen, die im Bild vorliegen müssen, damit ein Ereignis als detektiert und/oder vorliegend gilt.

Die Bildanalyseeinheit ist ausgebildet, basierend auf dem Bild und den Konfigurationsdaten festzustellen, ob das Ereignis in der Szene vorliegt. Beispielsweise ist die Bildanalyseeinheit ausgebildet, das Bild und/oder die Szene auszuwerten, im Speziellen Objekte, Gegenstände, Personen und/oder Tiere zu Klassifizieren. Die Bildanalyseeinheit ist vorzugsweise ausgebildet, das Bild auszuwerten, ob die Informationen, Klassifikationen und/oder Eigenschaften im Bild auffindbar sind, die vorliegen müssen zur Detektion des Ereignisses, insbesondere basierend auf der eingestellten und/oder festgelegten Sensitivität. Die Detektionseinrichtung weist eine Störgrößenauswahleinheit auf. Die Störgrößenauswahleinheit umfasst eine Mehrzahl an auswählbaren Störgrößen, welche datentechnisch hinterlegt und/oder gespeichert sind.

Beispielsweise weist die Störgrößenauswahleinheit mindestens drei, zehn oder einhundert auswählbare Störgrößen auf. Insbesondere sind weitere Störgrößen ergänzbar, hinterlegbar und/oder speicherbar, zum Beispiel durch einen Hersteller. Die Störgrößenauswahleinheit ist ausgebildet, dass der Benutzer aus der Mehrzahl der Störgrößen eine oder mehrere Störgrößen auswählen kann, insbesondere manuell, per Touchscreen, Keyboard oder Maus. Gemäß der Erfindung erfolgt die Auswahl aus einer Datenbank der Störgrößenauswahleinheit, beispielsweise aus einem Drop-down-menü.

Die Störgrößen beschreiben und/oder bilden potentielle Fehlerquellen. Als potentielle Fehlerquellen werden beispielsweise Objekte, Gegenstände, Einrichtungen und/oder Vorgänge verstanden, die von der Bildanalyseeinheit als, insbesondere für Standard und/oder eingestellte Konfigurationsdaten, als Ereignis bewertet und/oder detektiert würden, obwohl sie keines darstellen. Beispielsweise sind Fehlerquellen Ventilatoren, Blinklichter, langsam bewegende Objekte, Dunst, Wasserdampf, Vibrationen und/oder ein blendender Hintergrund.

Die Detektionseinrichtung weist eine Konfigurationseinheit auf. Die Konfigurationseinheit ist ausgebildet, basierend auf der von dem Benutzer ausgewählten Störgröße die Konfigurationsdaten der Bildanalyseeinheit anzupassen, zu ändern, einzustellen und/oder zu regeln. Insbesondere ist die Konfigurationseinheit ausgebildet, die Konfigurationsdaten der Bildanalyseeinheit zu ändern, wobei diese datentechnisch, regelungstechnisch und/oder signaltechnisch verbunden sind. Die Konfigurationseinheit ist ausgebildet, die Konfigurationsdaten so zu regeln, anzupassen, einzustellen und/oder zu ändern, dass die zu der ausgewählten Störgröße gehörende Fehlerquelle nicht weiter fälschlich als Ereignis detektiert wird. Beispielsweise werden basierend auf der ausgewählten Störgröße die Sensitivität oder die nötigen Eigenschaften angepasst und/oder nachgeregelt. Insbesondere werden durch die Konfigurationseinheit basierend auf der ausgewählten Störgröße die Konfigurationsdaten der Bildanalyseeinheit so eingestellt, nachgeregelt und/oder angepasst, dass die zur Störgröße gehörende Fehlerquelle unterdrückt ist und/oder nicht als Ereignis detektiert wird.

Der Erfindung liegt die Überlegung zu Grunde, dass zur Verbesserung der Falschalarmrate bei bildbasierter Detektion von Ereignissen, eine vereinfachte Benutzung durch den Benutzer und/oder eine vereinfachte Inbetriebnahme durch eine Benutzerkonfiguration genutzt werden kann. Der Benutzer kennt die Gegebenheiten des Überwachungsbereichs und kann durch die Auswahl von Störgrößen bzw. von Fehlalarmquellen ohne tiefe Fachkenntnis die Konfiguration verbessern. Insbesondere muss der Benutzer Szenenbereiche, Gegenstände, Vorgänge und/oder Fehlerquellen nicht komplett ausnehmen aus der Ereignisbestimmung, vielmehr wird vorgeschlagen, dem Benutzer durch Auswahl einer Störgröße (z.B. Ventilator) die Konfigurationsdaten an derartige Fehlerquellen anzupassen, so dass lediglich die Art der Fehlerquelle von der Detektion ausgeschlossen wird, ein reales Ereignis im gleichen Abschnitt aber weiterhin als Ereignis detektiert wird. Die Konfigurationsdaten werden automatisch nur so stark angepasst, wie zur Unterdrückung der jeweiligen Fehlerquelle nötig.

Besonders bevorzugt ist, dass die auswählbaren Störgrößen Unterdrückungsdaten aufweisen und/oder dass die Störgrößenauswahleinheit den Unterdrückungsdaten zugeordnete Unterdrückungsdaten umfasst. Die Unterdrückungsdaten sind beispielsweise als Datensatz ausgebildet, insbesondere als ein Datensatz ähnlich und/oder entsprechender Struktur der Konfigurationsdaten. Vorzugsweise bilden die Unterdrückungsdaten Konfigurationsdaten, im Speziellen stellen die Unterdrückungsdaten eine bestimmte Wahl und/oder Parametrisierung der Konfigurationsdaten dar. Beispielsweise bilden die zu einer Störgröße gehörigen Unterdrückungsdaten eine Parametrisierung bzw. Wahl der Konfigurationsdaten, für die die Störgröße nicht fälschlich als Ereignis detektiert wird. Die Konfigurationseinheit ist ausgebildet, die zur ausgewählten Störgröße gehörigen Unterdrückungsdaten als Konfigurationsdaten in der Bildanalyseeinheit zu setzten, anzuwenden und/oder einzustellen. Dieser Ausgestaltung liegt die Überlegung zu Grunde, eine vereinfachte Konfiguration zur Unterdrückung von Falschalarmen durch den Benutzer zu ermöglichen, indem dieser nur die Störgröße bzw. Fehlerquelle kennen und auswählen muss, wobei zu dieser Störgröße bzw. Fehlerquelle bereits bekannte Einstellungen für Konfigurationsdaten hinterlegt sind und eingestellt werden, die diese Art von Fehlerquelle zukünftig in der Detektion ausschließen.

In einer Ausgestaltung der Erfindung ist die Konfigurationseinheit ausgebildet, für die ausgewählte Störgröße die Konfigurationsdaten global für die gesamte Szene und/oder das gesamte Bild zu ändern. Beispielsweise werden der Störgröße zugeordnete Unterdrückungsdaten, insbesondere zur Auswertung und Ereignisbestimmung, auf das gesamte Bild und/oder die gesamte Szene angewendet. Beispielsweise wird eine Sensitivität für das Feststellen des Ereignisses für das gesamte Bild bzw. Szene geregelt und/oder angepasst. Wird zum Beispiel als Fehlerquelle bzw. Störgröße eine zu starke Beleuchtung oder Blendwirkung ausgewählt, kann ein Mindestkontrast oder eine Mindestbeleuchtungsstärke für die gesamte Szene und/oder das gesamte Bild als globale Konfigurationsdatum angewendet und/oder gesetzt werden.

Vorzugsweise umfasst die Detektionseinrichtung eine Maskenauswahleinheit. Die Maskenauswahleinheit ist zur Festlegung eines Abschnittes der Szene (Szenenabschnitt) als Maske ausgebildet. Der Szenenabschnitt kann beispielsweise als ein flächiger, zusammenhängender oder mosaikartiger, Abschnitt im Bild ausgewählt und/oder festgelegt werden. Beispielsweise umfasst die Detektionseinrichtung, insbesondere die Maskenauswahleinheit, eine Touchscreeneinheit, eine Bildschirmeinheit, Computermaus und/oder Tastatur zur graphischen Auswahl und/oder Festlegung des Szenenabschnitts. Die Störgrößenauswahleinheit ist hierbei zur Auswahl der Störgröße für die Maske und/oder für mehrere Masken ausgebildet. Beispielsweise kann der Benutzer mittels der Maskenauswahleinheit erst eine Maske auswählen und/oder festlegen, beispielsweise deren geometrische Form und/oder Fläche, und anschließend für diese Maske eine Störgröße bzw. Fehlerquelle auswählen. Zum Beispiel kann der Benutzer in dem Bild einen Bereich der Szene auswählen und als Maske markieren, in dem sich ein Fenster oder ein Ventilator als Fehlerquelle befindet, wobei er anschließend für diese Maske als Störgröße und/oder Fehlerquelle "Fenster" oder "Ventilator" auswählt, wobei das Konfigurationsmodul dann beispielsweise die Konfigurationsdaten für die Maske bzw. den Szenenabschnitt der Maske so einstellt und/oder regelt, dass ein blendendes Fenster oder ein bewegender Ventilator, nicht fälschlich als Ereignis detektiert wird. Dieser Ausgestaltung liegt die Überlegung zu Grunde, eine Detektionseinrichtung bereitzustellen, bei der ein Benutzer lokal Konfigurationsdaten an ihm bekannte Fehlerquellen bzw. Störgrößen anpassen kann.

Die Unterdrückungsdaten und/oder die Konfigurationsdaten umfassen vorzugsweise eine Verifikationszeit, einen Sensitivitätsgrad, eine Sollbewegung, eine Ausschlussbewegungsrichtung, eine Mindesthelligkeit, einen Mindestkontrast, eine Mindestbewegungsgeschwindigkeit und/oder eine Höchstbewegungsgeschwindigkeit. Die Verifikationszeit kann eine untere und/oder obere Schranke aufweisen, wobei ein Merkmal und/oder Ereignis in der Szene bzw. den Bildern mindestens und/oder höchsten die Verifikationszeit vorliegen muss, damit ein Ereignis als detektiert gilt. Ein Sensitivitätsgrad gibt beispielsweise an, wie sensitiv und/oder scharf die Detektion erfolgen soll, beispielsweise ob viele Fehlerquellen vorliegen und/oder ob ein besonders gefährdeter Bereich (z.B. Labor) vorliegt. Eine Sollbewegung beschreibt beispielsweise eine Bewegung (z.B. Trajektorie) die zur Feststellung eines Ereignisses vorliegen muss. Eine Ausschlussbewegungsrichtung kann beispielsweise eine nach unten gerichtete Bewegung sein, wenn aufsteigender Rauch als Ereignis detektiert werden soll.

Besonders bevorzugt ist, dass die Störquellen als Objektarten ausgebildet sind, benannt sind und/oder beschreiben. Beispielsweise sind die Störquellen mittels der Störquellenauswahleinheit dem Benutzer alphanummerisch und/oder semantisch dargestellt und/oder auswählbar. Beispielsweise sind die Störquellen und/oder Objektarten benannt, auswählbar und/oder dargestellt als "Ventilator", "Blinklicht", "Blendelement" oder "Kochstelle mit Dampfentwicklung". Die Störquellen sind mittels der Störquellenauswahleinheit für den Benutzer graphisch (z.B. Touchscreen oder Anzeige mit Computermaus) und/oder alphanumerisch (z.B. Computertastatur) auswählbar. Vorzugsweise bildet und/oder umfasst die Maskenauswahleinheit und/oder die Störgrößenauswahleinheit ein Graphisches-User-Interface, wie zum Beispiel eine Auswahlmaske und/oder Anzeige optische Bedien- und Auswahlelemente.

Die zu detektierenden Ereignisse sind beispielsweise als Brand, Feuer und/oder Rauch ausgebildet. Die Detektionseinrichtung bildet dabei insbesondere eine Brandmeldeeinrichtung. Die Brandmeldeeinrichtung ist vorzugsweise koppelbar und/oder angebunden an eine Brandmeldezentrale und/oder Brandmeldeanlage.

Die Erfindung betrifft ferner ein Verfahren zur Detektion eines Ereignisses in einem Überwachungsbereich, insbesondere mittels der Detektionseinrichtung und/oder wie vorher beschreiben. Basierend auf Konfigurationsdaten wird mindestens ein Bild und/oder eine Bildsequenz einer Szene des Überwachungsbereichs zur Detektion des Ereignisses auf ein Vorliegen des Ereignisses untersucht. Das Ereignis bildet und/oder beschreibt beispielsweise einen Brand, Feuer und/oder Rauch. Von dem Benutzer kann und/oder wird eine Störgröße aus einer Mehrzahl an Störgrößen ausgewählt werden, wobei die Konfigurationsdaten basierend auf der ausgewählten Störgröße zur Unterdrückung von Fehlerquellen angepasst werden. Die Anpassung erfolgt insbesondere Steuerungstechnisch und/oder computerbasiert.

Vorzugsweise wird von dem Benutzer ein Szenenabschnitt als Abschnitt der Szene und/oder des Bildes ausgewählt. Die Auswahl erfolgt insbesondere graphisch, beispielsweise auf einer Anzeige. Der Szenenabschnitt bildet eine Maske. Von Benutzer kann ausgewählt werden und/oder wird ausgewählt eine Störgröße für die Maske. Gemäß der Ausgestaltung werden die Konfigurationsdaten für die Maske gemäß der ausgewählten Störgröße angepasst.

Ferner betrifft die Erfindung ein Computerprogramm. Das Computerprogramm ist auf einem Computer und/oder der Detektionseinrichtung ausführbar. Das Computerprogramm ist ausgebildet, bei Ausführung auf dem Computer und/oder der Detektionseinrichtung das Verfahren wie vorher beschrieben auszuführen.

Einen weiteren Gegenstand der Erfindung bildet ein maschinenlesbares Speichermedium, zum Beispiel eine CD oder DVD. Auf dem Speichermedium ist das Computerprogramm gespeichert.

Weitere Vorteile, Wirkungen und Ausgestaltungen ergeben sich aus den beigefügten Figuren und deren Beschreibung. Dabei zeigen:
Figur 1 eine schematische Überwachung eines Überwachungsbereichs mit einer Kamera;
Figuren 2a und 2b schematische Anzeigen einer Detektionseinrichtung.

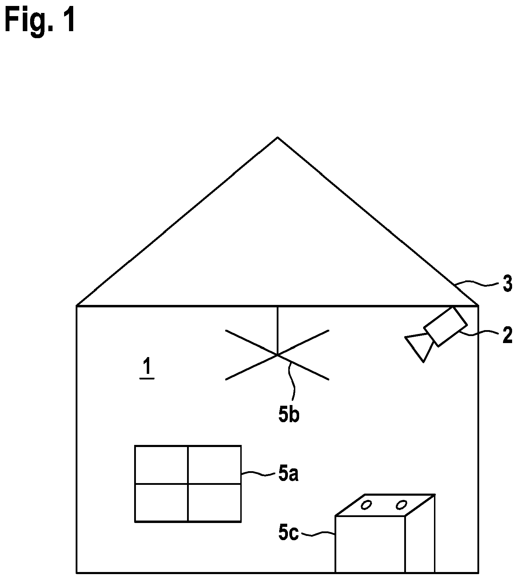

Figur 1 zeigt ein Ausführungsbeispiel einer Überwachung eines Überwachungsbereichs 1 mit einer Kamera 2. Der Überwachungsbereich 1 ist ein Innenbereich eines Gebäudes 3. Die Kamera 2 ist ausgebildet und angeordnet, einen Raum des Gebäudes 3 kameratechnisch, bildtechnisch und/oder videotechnisch zu erfassen und/oder zu überwachen. Die Kamera 2 ist ausgebildet, Bilder 4 des Überwachungsbereichs 1 aufzunehmen und bereitzustellen. Die Bilder 4 bilden und/oder zeigen eine Szene des Überwachungsbereichs 1. Die Szene zeigt und/oder umfasst dabei Objekte 5 bzw. Gegenstände, wie zum Beispiel Möbel. Die Objekte 5 werden und /oder sind in den Bildern abgebildet und/oder gezeigt. Die Szene und damit die Bilder 4 umfassen bzw. zeigen hier ein Fenster 5a, einen Deckenventilator 5b und einen Elektroherd 5c. Der Überwachungsbereich 1 ist brandtechnisch mittels einer Detektionseinrichtung 6 überwacht. Die Detektionseinrichtung 6 ist datentechnisch mit der Kamera 2 verbunden, wobei der Detektionseinrichtung 6 die Bilder der Kamera 2 bereitgestellt sind. Die Detektionseinrichtung 6 weist beispielsweise eine Rechnereinheit und eine Anzeige, wie einen Touchscreen 7, auf.

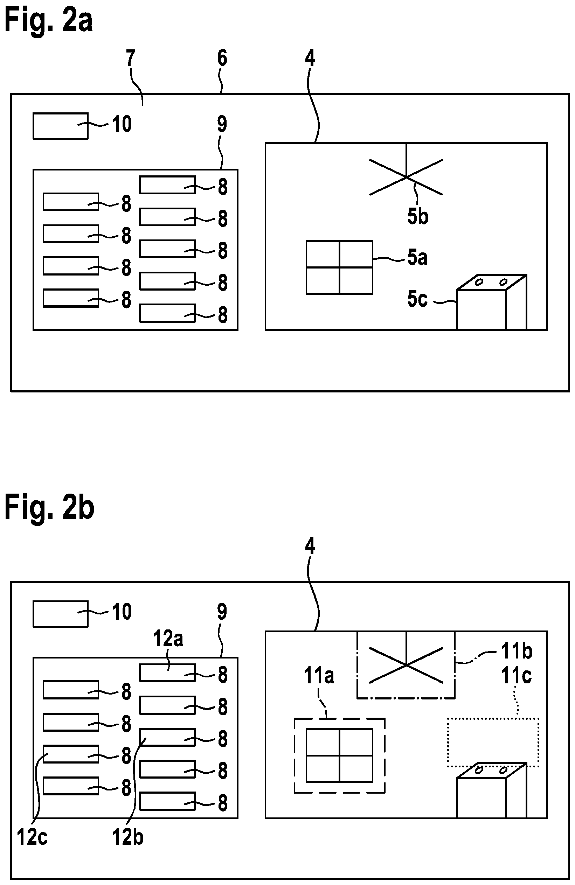

Figur 2a zeigt schematisch ein Ausführungsbeispiel einer Detektionseinrichtung 6, die als Rechner mit Touchscreen, beispielsweise einem Tablettcomputer, ausgebildet ist. Die Detektionseinrichtung 6 ist ausgebildet, die bereitgestellten Bilder 4 der Kamera 2 zu untersuchen und basierend auf Konfigurationsdaten die Bilder 4 auf ein Vorliegen des Ereignisses, hier Brand, zu untersuchen. Hierbei ist eine Bildanalyseeinheit ausgebildet, Merkmale wie Kontraste, Muster, Formern, Bewegungen und/oder Objekte in der Szene bzw. den Bildern 4 zu suchen und diese ggf. als Ereignis (Brand) zu bewerten.

Der Benutzer kann mittels der Detektionseinrichtung 6 aus einer Mehrzahl an Störgrößen 8, beispielsweise als Liste und/oder Auswahlmenü 9 angezeigt, auswählen. Die Störgrößen 8 sind beispielsweise als Textform oder graphisch (Icon) zur Auswahl dargestellt. Die Störgrößen 8 beschreiben Fehlerquellen bei der Detektion des Ereignisses basierend auf Bildern 4. Dies sind insbesondere bekannte und/oder übliche Fehlerquellen, wie beispielsweise Bewegungen, Tiere, Blinklichter, Fenster oder Dampf/Dunstbereiche. Eine Maskenauswahleinheit, hier als teilweise als auswählbares GUI-Element 10 realisiert, ist ausgebildet, dem Benutzer die Festlegung von Bildbereichen und/oder Szenenabschnitten als Maske 11 zu ermöglichen.

Figur 2b zeigt das Ausführungsbeispiel aus Figur 2a, wobei hier zusätzlich durch den Benutzer und die Maskenauswahleinheit Masken 11 festgelegt wurden. Hierbei wurden die Masken 11a, 11b und 11c vom Benutzer festgelegt, wobei die Maske 11a den Bereich der Szene umfasst, in welchem sich das Fenster 5a befindet, die Maske 11b den Bereich der Szene umfasst, in der sich der Deckenventilator 5b befindet und die Maske 11c den Bereich der Szene oberhalb des Elektroherdes 5c, wo sich üblicherweise Wasserdampf bildet. Mittels des Menus 9 hat der Benutzer den Masken 11 jeweils Störgrößen 9 zugeordnet, wobei der Maske 11a die Störgröße 12a mit der Fehlerquelle Fenster mit Blendwirkung, der Maske 11b die Störgröße 12b mit der Fehlerquelle Ventilator bzw. rotierendes Element und der Maske 11c die Störgröße 12c Dampfentwicklungsbereich zugeordnet ist. Eine Konfigurationseinheit, zum Beispiels als Softwaremodul, ist ausgebildet für die Szenenabschnitte bzw. die Abschnitte des Bildes der Masken 11 die Konfigurationsdaten so anzupassen, dass in diesen Bereichen die Fehlerquelle nicht fälschlich als Ereignis bestimmt wird. Beispielsweise werden die Konfigurationsdaten im Bildbereich der Maske 11a so angepasst, dass eine erforderliche Mindesthelligkeit für das Ereignis gefordert wird, für den Bildbereich der Maske 11b die Konfigurationsdaten so angepasst werden, dass Rotationsbewegungen nicht als Ereignis bewertet werden und im Bildbereich der Maske 11c Dampf, Dunst und Rauch in der Ereignisdetektion unterdrückt werden. im Bereich außerhalb der Masen 12 werden die üblichen oder initialen Konfigurationsdaten angewendet.

## Patentansprüche

1. Detektionseinrichtung (6) zur Detektion eines Ereignisses in einem Überwachungsbereich (1),
mit einer Übernahmeschnittstelle zur Übernahme mindestens eines Bildes (4), wobei das Bild (4) eine Szene des Überwachungsbereichs (1) zeigt, mit einer Bildanalyseeinheit,
wobei die Bildanalyseeinheit Konfigurationsdaten aufweist und ausgebildet ist, basierend auf dem Bild (4) und den Konfigurationsdaten die Szene des Überwachungsbereichs (1) auf Vorliegen des Ereignisses zu untersuchen und zu detektieren,
**gekennzeichnet durch** eine Störgrößenauswahleinheit und eine Konfigurationseinheit,
wobei die Störgrößenauswahleinheit eine Mehrzahl an von einem Benutzer auswählbaren Störgrößen (8) aufweist, wobei die Störgrößen (8) potentielle Fehlerquellen bei der Detektion des Ereignisses in der Szene bilden,
wobei die Störgrößen (8) aus einer Datenbank der Störgrößenauswahleinheit ausgewählt werden,
wobei die Konfigurationseinheit ausgebildet ist, basierend auf der ausgewählten Störgröße (12a,b,c) die Konfigurationsdaten der Bildanalyseeinheit zur Unterdrückung der zugehörigen Fehlerquelle anzupassen.

2. Detektionseinrichtung (6) nach Anspruch 1, **dadurch gekennzeichnet, dass** die auswählbaren Störgrößen (8) Unterdrückungsdaten aufweisen und/oder zugeordnet sind, wobei die Konfigurationseinheit ausgebildet ist, zur Unterdrückung der Fehlerquelle die Unterdrückungsdaten als Konfigurationsdaten zu setzten.

3. Detektionseinrichtung (6) nach Anspruch 1 oder 2, **dadurch gekennzeichnet, dass** die Konfigurationseinheit ausgebildet ist, basierend auf der ausgewählten Störgröße (12, b,c) die Konfigurationsdaten der Bildanalyseeinheit zur Unterdrückung der zugehörigen Fehlerquelle global für die gesamte Szene zu regeln.

4. Detektionseinrichtung (6) nach einem der vorherigen Ansprüche, **gekennzeichnet durch** eine Maskenauswahleinheit zur Festlegung eines Szenenabschnitts als Maske (11,11a,b,c) durch den Benutzer, wobei die Störgrößenauswahleinheit zur Auswahl der auswählbaren Störgrößen (8) für die Maske durch den Benutzer ausgebildet ist, wobei die Konfigurationseinheit ausgebildet ist, basierend auf der ausgewählten Störgröße (12a,b,c) die Konfigurationsdaten der Bildanalyseeinheit innerhalb der Maske (11,11a,b,c) zur Unterdrückung der zugehörigen Fehlerquelle zu regeln.

5. Detektionseinrichtung (6) nach einem der vorherigen Ansprüche, **dadurch gekennzeichnet, dass** die Unterdrückungsdaten eine Verifikationszeit, einen Sensitivitätsgrad, eine Sollbewegungsrichtung, eine Ausschlussbewegungsrichtung, eine Mindesthelligkeit, eine Mindest-und/oder Höchstbewegungsgeschwindigkeit umfasst.

6. Detektionseinrichtung (6) nach einem der vorherigen Ansprüche, **dadurch gekennzeichnet, dass** die auswählbaren Störquellen (8) als Objektarten insbesondere mögliche Szenenobjekte ausgebildet und/oder benannt sind.

7. Detektionseinrichtung (6) nach einem der vorherigen Ansprüche, **dadurch gekennzeichnet, dass** die Störgrößenauswahleinheit zur alphanummerischen und/oder graphischen Auswahl ausgebildet ist.

8. Detektionseinrichtung (6) nach einem der vorherigen Ansprüche, **dadurch gekennzeichnet, dass** die Maskenauswahleinheit und/oder die Störgrößenauswahleinheit ein Graphisches-User-Interface zur Auswahl und/oder Festlegen durch den Benutzer aufweist.

9. Detektionseinrichtung (6) nach einem der vorherigen Ansprüche, **dadurch gekennzeichnet, dass** das zu detektierende Ereignis als Brand, Feuer und/oder Rauch ausgebildet ist.

10. Verfahren zur Detektion eines Ereignisses in einem Überwachungsbereich (1), insbesondere mittels der Detektionseinrichtung (6) nach einem der vorherigen Ansprüche, wobei basierend auf Konfigurationsdaten mindestens ein Bild (4) einer Szene des Überwachungsbereichs (1) zur Detektion des Ereignisses auf ein Vorliegen des Ereignisses untersucht wird, wobei von einem Benutzer eine Störgröße (8) aus einer Mehrzahl an Störgrößen (8) auswählbar ist, wobei die Störgrößen (8) aus einer Datenbank der Störgrößenauswahleinheit ausgewählt werden, wobei die Konfigurationsdaten basierend auf der ausgewählten Störgröße (12a,b,c) zur Unterdrückung von Fehlerquellen angepasst werden.

11. Verfahren nach Anspruch 10, **dadurch gekennzeichnet, dass** eine Maske (11,11a,b,c) in der Szene und/oder dem Bild (4) vom Benutzer auswählbar ist.

12. Computerprogram zur Ausführung auf einem Computer und/oder der Detektionseinrichtung nach einem der Ansprüche 1 bis 9, wobei das Computerprogramm ausgebildet ist bei Ausführung auf dem Computer und/oder der Detektionseinrichtung (6) das Verfahren nach einem der Ansprüche 10 oder 11 auszuführen.

13. Maschinenlesbares Speichermedium, wobei auf dem Speichermedium das Computerprogramm nach Anspruch 12 gespeichert ist.

## Claims

1. Detection device (6) for detecting an event in a monitoring area (1),
comprising an import interface for importing at least one image (4), the image (4) showing a scene of the monitoring area (1), comprising an image analysis unit,
the image analysis unit having configuration data and being designed, on the basis of the image (4) and the configuration data, to examine the scene of the monitoring area (1) for the presence of the event and to detect it,
**characterized by** a disturbance variable selection unit and a configuration unit,
the disturbance variable selection unit having a plurality of disturbance variables (8) selectable by a user, the disturbance variables (8) forming potential error sources during the detection of the event in the scene,
the disturbance variables (8) being selected from a database of the disturbance variable selection unit,
the configuration unit being designed, on the basis of the selected disturbance variable (12a, b, c), to adapt the configuration data of the image analysis unit in order to suppress the associated error source.

2. Detection device (6) according to Claim 1, **characterized in that** the selectable disturbance variables (8) have and/or are assigned suppression data, the configuration unit being designed to set the suppression data as configuration data in order to suppress the error source.

3. Detection device (6) according to Claim 1 or 2, **characterized in that** the configuration unit is designed, on the basis of the selected disturbance variable (12, b, c), to control the configuration data of the image analysis unit in order to suppress the associated error source globally for the entire scene.

4. Detection device (6) according to any of the preceding claims, **characterized by** a mask selection unit for the definition of a scene section as a mask (11, 11a, b, c) by the user, the disturbance variable selection unit being designed for the selection of the selectable disturbance variables (8) for the mask by the user, the configuration unit being designed, on the basis of the selected disturbance variable (12a, b, c), to control the configuration data of the image analysis unit within the mask (11, 11a, b, c) in order to suppress the associated error source.

5. Detection device (6) according to any of the preceding claims, **characterized in that** the suppression data comprise a verification time, a degree of sensitivity, a target movement direction, an exclusion movement direction, a minimum brightness, a minimum and/or maximum movement speed.

6. Detection device (6) according to any of the preceding claims, **characterized in that** the selectable disturbance sources (8) are designed and/or designated as object types, in particular possible scene objects.

7. Detection device (6) according to any of the preceding claims, **characterized in that** the disturbance variable selection unit is designed for alphanumeric and/or graphical selection.

8. Detection device (6) according to any of the preceding claims, **characterized in that** the mask selection unit and/or the disturbance variable selection unit have/has a graphical user interface for selection and/or definition by the user.

9. Detection device (6) according to any of the preceding claims, **characterized in that** the event to be detected is designed as conflagration, fire and/or smoke.

10. Method for detecting an event in a monitoring area (1), in particular by means of the detection device (6) according to any of the preceding claims, wherein, on the basis of configuration data, at least one image (4) of a scene of the monitoring area (1) is examined for presence of the event in order to detect the event, wherein a disturbance variable (8) is selectable from a plurality of disturbance variables (8) by a user, wherein the disturbance variables (8) are selected from a database of the disturbance variable selection unit, wherein the configuration data are adapted on the basis of the selected disturbance variable (12a, b, c) in order to suppress error sources.

11. Method according to Claim 10, **characterized in that** a mask (11, 11a, b, c) in the scene and/or the image (4) is selectable by the user.

12. Computer program for execution on a computer and/or the detection device according to any of Claims 1 to 9, wherein the computer program is designed to carry out the method according to either of Claims 10 and 11 upon execution on the computer and/or the detection device (6) .

13. Machine-readable storage medium, wherein the computer program according to Claim 12 is stored on the storage medium.

## Revendications

1. Dispositif de détection (6) permettant la détection d'un événement dans une zone de surveillance (1),
comprenant une interface d'acquisition permettant l'acquisition d'au moins une image (4), l'image (4) présentant une scène de la zone de surveillance (1), au moyen d'une unité d'analyse d'image,
dans lequel l'unité d'analyse d'image comporte des données de configuration et est conçue pour, sur la base de l'image (4) et des données de configuration, examiner et détecter la scène de la zone de surveillance (1) quant à la présence de l'événement,
**caractérisé par** une unité de sélection de grandeurs perturbatrices et une unité de configuration,
dans lequel l'unité de sélection de grandeurs perturbatrices comporte une pluralité de grandeurs perturbatrices (8) pouvant être sélectionnées par un utilisateur, les grandeurs perturbatrices (8) constituant des sources d'erreur potentielles lors de la détection de l'événement dans la scène,
dans lequel les grandeurs perturbatrices (8) sont sélectionnées dans une base de données de l'unité de sélection de grandeurs perturbatrices,
dans lequel l'unité de configuration est conçue pour adapter, sur la base de la grandeur perturbatrice sélectionnée (12a, b, c), les données de configuration de l'unité d'analyse d'image pour supprimer la source d'erreur associée.

2. Dispositif de détection (6) selon la revendication 1, **caractérisé en ce que** les grandeurs perturbatrices (8) pouvant être sélectionnées comportent et/ou sont associées à des données de suppression, l'unité de configuration étant conçue pour définir les données de suppression en tant que données de configuration pour supprimer la source d'erreur.

3. Dispositif de détection (6) selon la revendication 1 ou 2, **caractérisé en ce que** l'unité de configuration est conçue pour, sur la base de la grandeur perturbatrice sélectionnée (12, b, c), réguler globalement pour l'ensemble de la scène les données de configuration de l'unité d'analyse d'image pour supprimer la source d'erreur associée.

4. Dispositif de détection (6) selon l'une quelconque des revendications précédentes, **caractérisé par** une unité de sélection de masque permettant à l'utilisateur de définir une partie de scène en tant que masque (11, 11a, b, c), l'unité de sélection de grandeurs perturbatrices étant conçue pour permettre à l'utilisateur de sélectionner les grandeurs perturbatrices (8) pouvant être sélectionnées pour le masque, l'unité de configuration étant conçue pour réguler, sur la base de la grandeur perturbatrice sélectionnée (12a, b, c), les données de configuration de l'unité d'analyse d'image à l'intérieur du masque (11, 11a, b, c) pour supprimer la source d'erreur associée.

5. Dispositif de détection (6) selon l'une quelconque des revendications précédentes, **caractérisé en ce que** les données de suppression comprennent un temps de vérification, un degré de sensibilité, une direction de déplacement de consigne, une direction de déplacement d'exclusion, une luminosité minimale, une vitesse de déplacement minimale et/ou maximale.

6. Dispositif de détection (6) selon l'une quelconque des revendications précédentes, **caractérisé en ce que** les sources de perturbation (8) pouvant être sélectionnées sont conçues et/ou nommées en tant que types d'objets, notamment des objets de scène possibles.

7. Dispositif de détection (6) selon l'une quelconque des revendications précédentes, **caractérisé en ce que** l'unité de sélection de grandeurs perturbatrices est conçue pour une sélection alphanumérique et/ou graphique.

8. Dispositif de détection (6) selon l'une quelconque des revendications précédentes, **caractérisé en ce que** l'unité de sélection de masque et/ou l'unité de sélection de grandeurs perturbatrices comporte une interface utilisateur graphique permettant la sélection et/ou la définition par l'utilisateur.

9. Dispositif de détection (6) selon l'une quelconque des revendications précédentes, **caractérisé en ce que** l'événement à détecter est conçu sous la forme d'un incendie, d'un feu et/ou d'une fumée.

10. Procédé de détection d'un événement dans une zone de surveillance (1), en particulier au moyen du dispositif de détection (6) selon l'une quelconque des revendications précédentes, dans lequel, sur la base de données de configuration, au moins une image (4) d'une scène de la zone de surveillance (1) permettant la détection de l'événement est examinée pour déterminer si l'événement se produit, une grandeur perturbatrice (8) pouvant être sélectionnée par un utilisateur parmi une pluralité de grandeurs perturbatrices (8), les grandeurs perturbatrices (8) étant sélectionnées dans une base de données de l'unité de sélection de grandeurs perturbatrices, les données de configuration étant adaptées sur la base de la grandeur perturbatrice sélectionnée (12a, b, c) pour supprimer les sources d'erreur.

11. Procédé selon la revendication 10, **caractérisé en ce qu'**un masque (11, 11a,b,c) peut être sélectionné par l'utilisateur dans la scène et/ou l'image (4).

12. Programme informatique destiné à être exécuté sur un ordinateur et/ou le dispositif de détection selon l'une quelconque des revendications 1 à 9, dans lequel le programme informatique est conçu pour mettre en œuvre le procédé selon l'une quelconque des revendications 10 ou 11 lors de son exécution sur l'ordinateur et/ou le dispositif de détection (6).

13. Support de stockage lisible par machine sur lequel est stocké le programme informatique selon la revendication 12.
